# EUROPÄISCHE PATENTSCHRIFT

(11) **EP 1 634 802 B1**
(45) Veröffentlichungstag und Bekanntmachung des Hinweises auf die Patenterteilung: **25.02.2009**
(21) Anmeldenummer: 05018304.5
(22) Anmeldetag: 23.08.2005
(51) Int. Cl.: B62J 9/00

(54) **Befestigungs-Adapter**
Fixing device
Dispositif de fixation

(30) Priorität: 08.09.2004 DE 202004014057 U; 06.04.2005 DE 202005005470 U
(43) Veröffentlichungstag der Anmeldung: 15.03.2006
(73) Patentinhaber: SW-Motech GmbH & Co. KG, 35282 Rauschenberg (DE)
(72) Erfinder: Swora, Dipl. -Ing. Jürgen, 35094 Lahntal (DE); Diehl, Dipl. Kfm Jörg, 35282 Rauschenberg (DE); Jockel, Kai, 35274 Kirschhain (DE)
(74) Vertreter: Buchhold, Jürgen

(56) Entgegenhaltungen:
- EP-B1- 1 076 003
- WO-A-02/097319
- WO-A-20/04076269
- JP-A- 2001 124 267
- US-A1- 2004 031 833

## Beschreibung

Die Erfindung betrifft einen Adapter gemäß dem Oberbegriff von Anspruch 1, insbesondere zur lösbaren Befestigung einer Gerätschaft, eines Tankrucksacks o.dgl. Ein derartiger Adapter wird von der US 2004/0031833 A1 gezeigt.

Bei Kraftfahrzeugen, insbesondere Motorrädern, besteht das Bedürfnis, mitzuführende Gerätschaften, Behälter u.dgl. In abnehmbarer Weise anzubrlngen. Unter anderem sind Tankrucksäcke In Form von Reißverschluß-Taschen oder -Kleinkoffern üblich, die z.B. 10 ℓ bis 20 ℓ Fassungsvermögen haben. Die Vielzahl unterschiedlicher Tankformen und -größen macht allerdings die Befestigung problematisch, die jedoch für die Sicherheit im Straßenverkehr sehr wichtig ist Eine klappbare Anhängeinrichtung ist in EP 1 076 003 B1 angegeben. Zur Festlegung am Tank bzw. Fahrzeugrahmen benutzt man vielfach Gurte, Riemen, Verschnürungen u.dgl. Bei Blechtanks hat man Magnetelemente eingesetzt, die sich gemäß DE 200 20 651 U1 in Bodenfächem des Tankrucksacks passend anordnen lassen, Es wurde auch eine spezielle Anordnung vorgeschlagen, wobei der Rucksack über dem Tank quasi schwebt, mit ihm also nur minimalen Kontakt hat.

Zu besserer Befestigung dient laut DE 298 23 838 U1 ein Adapter mit einer Platte, deren Oberseite dem Tankrucksack angepaßt ist und deren auf die Gestalt und Größe des Tanks abgestimmte Unterseite an ihm mit Gurten. Saugfüßen oder Magneten angebracht wird. Dazu sind, wie im sonstigen Stand der Technik, verhältnismäßig umständliche und zum Teil aufwendige Befestigungsmittel notwendig. Die Adapterpilatte kann eine Ausnehmung für den Tankstutzen aufweisen, um das Betanken zu ermöglichen, ohne die Platte abnehmen zu müssen.

In US 2004/031833 A1 ist eine Vorrichtung mit einem ringförmigen Unterteil beschrieben, das an einem Flansch eines Motorrad-Tankverschlusses angeschraubt wird und mit einem Ringkörper verbindbar ist. Ein ebenfalls ringförmiges Oberteil, das mit dem Boden z.B. eines Tankrucksacks fest verbunden ist, ist in den unteren Ringkörper einführbar und daran durch Drehung fixierbar, wozu drei nach innen gerichtete Riegelbolzen des Ringkörpers in abgewinkelte Umfangsausnehmungen des Oberteils eingreifen. Ein Schnappriegel sichert die lösbare Verbindung. Allerdings kann der relativ enge Weg zur Tankstutzenöffnung beim Betanken hinderlich sein. Auch ist es für breit ausladende Gepäckstücke eventuell nachteilig, daß das Oberteil zur Einführung in das Unterteil, dessen Abmessungen durch den Tankverschluß vorgegeben sind, recht schmal sein muß und also bei größerem Gewicht ein verhältnismäßig großes Lastmoment wirksam wird, das zum Einreißen des Gepäckstückbodens führen kann.

Weitere derartige Adapter sind aus dem Stand der Technik zum Beispiel aus der JP 2001 124267 A, der WO 02/097319 A und der WO 2004/ 076269 A bekannt. Die JP 2001 124267 A und die WO 02/097319 A stellen eine gelenkige Verbindung von einem Oberteil und einem Unterteil jeweils über zusätzliche Bauteile dar, zum Beispiel einen Stift, welcher die beiden Bauteile durchdringt und somit eine Art Türscharnier bildet. Hierbei sind jeweils zusätzliche Bauteile erforderlich. Die Handhabung, insbesondere beim Lösen ist hierdurch deutlich erschwert.

Die WO 2004/076269 verbindet ein Oberteil mit einem Unterteil, jedoch erfolgt dies nicht um eine Schwenkachse, wie zum Beispiel gemäß der JP 2001 124267 A und der WO 02/097319 A, so dass der Zugriff auf einen unter der Verbindung befindlichen Tank erschwert ist.

Es ist ein wichtiges Ziel der Erfindung, die lösbare Befestigung insbesondere von Gerätschaften, Tankrucksäcken u.dgl. an einem Motorrad-Tankverschluß mit minimalem Aufwand weiter zu verbessern. Angestrebt wird eine möglichst einfache und stabile Konstruktion, die kostengünstig herstellbar ist, eine bequeme Handhabung ermöglicht, dauerhaft zuverlässig funktioniert und das Betanken nicht stört.

Hauptmerkmale der Erfindung sind in Anspruch 1 angegeben. Ausgestaltungen sind Gegenstand der Ansprüche 2 bis 22.

Bei einem Adapter mit zwei miteinander in lösbarer Weise verbindbaren Bauteilen, von denen eines an einer Gerätschaft, einem Tankrucksack o.dgl. und das andere an einem Tankverschlußdeckel anbringbar oder angebracht ist, z.B. durch Vernietung und/oder Verschraubung, wobei ein am Boden der Gerätschaft, des Tankrucksacks o.dgl. vorhandenes oder anbringbares Oberteil mit einem am Verschlußdeckel angebrachten Unterteil formähnlich und verrastbar ist, sieht die Erfindung laut Anspruch 1 vor, daß zumindest eines der beiden Bauteile Rahmen- oder Ringform hat, daß die Bauteile Rahmen- bzw. Ringenden aufweisen, die in gefügter, sicherbarer Position miteinander fluchten, und daß die Bauteile zur Verbindung um eine Schwenkachse an- oder ineinanderfügbar sind, die zur Ebene des Unterteils parallel verläuft.

Solche Adapter ermöglichen die ebenso rasche wie zuverlässige Ver- und Entrastung der Gerätschaft, des Tankrucksacks u.dgl. Die Befestigung und die Abnahme gehen einfach und schnell vor sich. Wichtig ist, daß die dennoch sichere Verankerung am Tankverschlußdeckel den Betankungsvorgang nicht beeinträchtigt, weil das schwenk- und lösbare Oberteil bequem aus der Zapfhahnstrecke entfernt und nachher problemlos wieder verrastet werden kann.

Die beiden Adapter-Bauteile können derart gestaltet sein, daß ein Bauteil das andere formschlüssig über- oder untergreift, was eine zuverlässige Kupplung gewährleistet. Die Rahmen- bzw. Ringform kann in einem Umfangsbereich eines oder jedes Bauteils unterbrochen sein, so daß eine offene Ring- oder Hufeisenform gegeben ist, wobei freie Rahmen- bzw. Ringenden - bevorzugt mit paarweise gegengleichen Abschnitten - miteinander fluchten. Alternativ hat das Oberteil zwischen seinen Enden ein diese verbindendes Brückenteil, das hohe Gestaltfestigkeit sichert. Ferner muß das Oberteil nicht unbedingt Rahmen- oder Ringform haben; es genügt, wenn es Rastmittel für das Unterteil aufweist, namentlich Rasthaken.

Zweckmäßig sind die Rahmen- bzw. Ringenden des einen Bauteils als Krallen und diejenigen des anderen Bauteils als Krallen-Gegenstücke ausgebildet, wobei jedes Gegenstück ein positives oder Voll-Element bilden kann, das von einer Kralle als negativem oder Hohl-Element zumindest teilweise umschlossen bzw, umschfießbar ist. Man hat also eine schalen- oder pfannenähnliche Gelenkverbindung.

Die bequeme Handhabung wird unterstützt durch Anfaßrippen zumindest an den Ring- bzw. Rahmenenden des Oberteils, Dieses kann an seiner Unterseite Anschlagrippen haben, die in der gefügten Position auf oder in einer Deckfläche des Unterteils sitzen.

Konstruktiv ist eine Ausgestaltung günstig, wobei die Bauteile einen inneren Freiraum begrenzen, indem einander formähnliche Durchgangsbegrenzungen von Ober- und Unterteil einer formähnliche Durchgangsbegrenzung eines auf dem Unterteil befestigten Deckelrings zugeordnet sind. Die Befestigung des Unterteils auf dem Deckelring kann zweckmäßig mit dessen Schrauben vorgenommen werden.

Nach einer vorteilhaften Weiterbildung sind die Bauteile in zusammengefügter Position in an sich bekannter Weise durch wenigstens eine Schnapprast sicherbar, die speziell an einer den Ring- bzw. Rahmenenden gegenüberliegenden Stelle der Bauteile angeordnet ist, z.B. an oder in einem Verbindungssteg. Sie besteht vorzugsweise aus einem an dem einen Bauteil angebrachten federbelasteten Schnäpper und aus einer dessen Raststift gegenüber angeordneten, insbesondere waagrechten Aufnahmebohrung im anderen Bauteil. Mit einer an dem Schnäpper angreifenden Schnur erfolgt die Entrastung bequem und schnell, auch wenn der Tankrucksack die Sicht verdeckt.

Hohe Dauerfestigkeit wird dadurch gewährleistet, daß die Bauteile als insbesondere aus Kunststoff bestehende Profilkörper mit Versteifurtgsrippen ausgebildet sind.

In weiterer Ausgestaltung der Erfindung ist das Oberteil an seiner Oberseite der Form und Größe einer zu haltemden Gerätschaft angepaßt, z.B. einer Digital- oder Videokamera, einem Navigationsgerät o.dgl, Dabei kann das Oberteil vorteilhaft einen Aufsatz vibrationsgedämpft haltern, so daß die gehalterte Cerätschaft schwingungsisoliert mit dem Adapter verbunden bzw. verbindbar ist.

Der Aufsatz kann ein Kupplungselement für die Gerätschaft tragen. Zweckmäßig ist dazu am Oberteil eine Scheibe, Platte o.dgl. befestigt, die seitlich abstehende lsolierelemente trägt, an denen der Aufsatz angebracht ist, z.B. sogenannte Schwingmetall-Klötze aus bzw. mit Gummi. Konstruktiv günstig ist es, wenn der Aufsatz schwingungsisoliert auf Armen einer mit dem Oberteil lösbar oder starr verbundenen Scheibe, Platte o.dgl. abgestützt ist, wobei diese berührungsfrei von einer Deckplatte übergriffen sein kann, die z.B. an Winkelleisten Lager für Isolierelemente trägt

Weitere Merkmale, Einzelheiten und Vorteile der Erfindung ergeben sich aus dem Wortlaut der Ansprüche sowie aus der folgenden Beschreibung von Ausführungsbelspielen anhand der Zeichnungen. Darin zeigen:
- Fig. 1: eine auseinandergezogene Schrägansicht eines Adapters,
- Fig. 2a: eine schematisierte Teilansicht von Rastteilen vor dem Fügen,
- Fig. 2b: eine schematisierte Teilansicht von Rasttellen in gefügter Position,
- Fig. 3: eine Teilansicht einer Schnapprast,

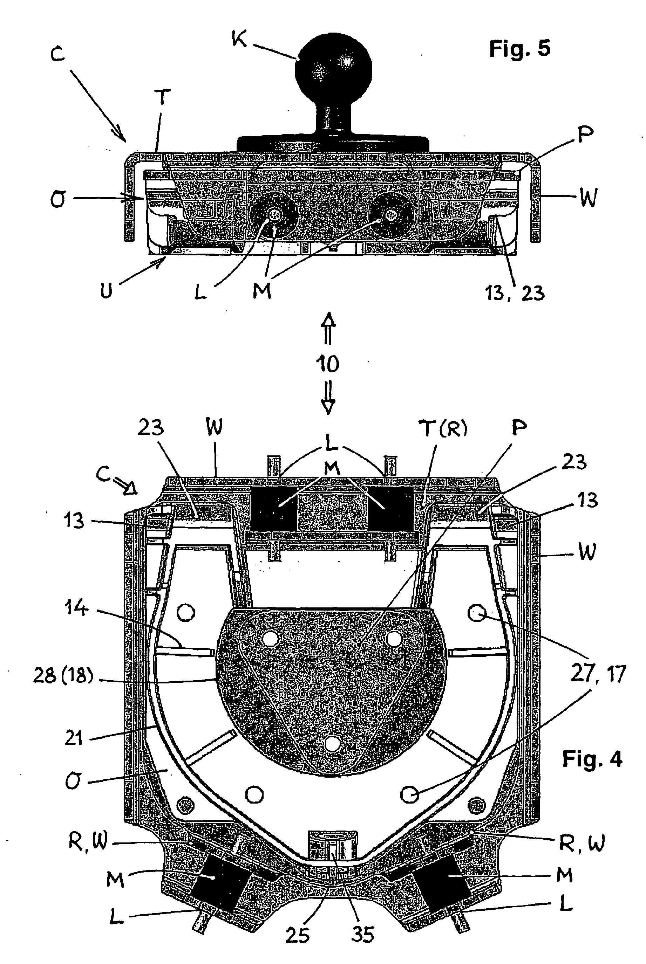

- Fig. 4: eine Druntersicht eines Adapters mit einem Aufsatz und
- Fig. 5: eine Stimansicht des Adapters von Fig. 4.

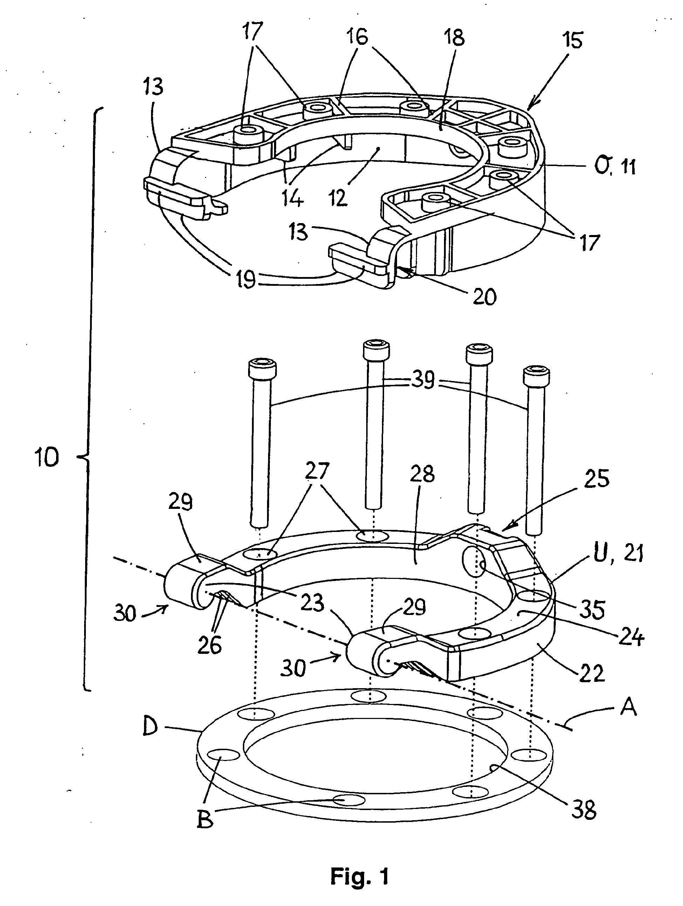

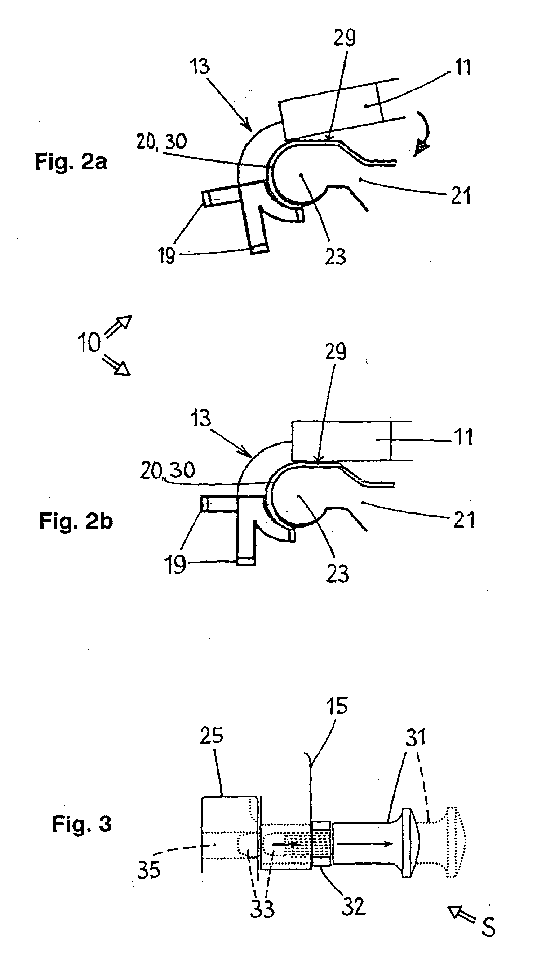

Ein insgesamt mit 10 bezeichneter Adapter besteht gemäß Fig. 1 aus zwei Bauteilen, nämlich einem Oberteil O und einem Unterteil U. Im dargestellten Beispiel sind beide Bauteile offene Ringkörper von hufeisenähnlicher Gestalt, die miteinander leicht ver- und entrastbar sind, wozu das Oberteil O freie Enden in Form von Krallen 13 und das Unterteil U freie Enden in Form von Krallengegenstücken 23 hat, die zu einem Gelenk ineinanderfügbar sind (siehe Fig. 2a und 2b).

Beide Bauteile O, U sind bevorzugt Kunststoff-Profilkörper. Das Oberteil O ist in der Mitte des Umfangsteils 11 mit einem Steg 15 versehen, und das Unterteil U hat in der Mitte seines Umfangsteils 21 einen dazu formähnlichen Steg 25. Am Oberteil O hat der Profilkörper Versteifungsrippen 16 und durchbohrte Nocken 17 in gleicher Umfangsverteilung wie Bohrungen 27 am Unterteil U. Beide Bauteile haben gleichartige Durchgangsbegrenzungen 18 bzw. 28. An einem (nicht gezeichneten) Tank eines Kraftrads beflndet sich ein Deckelring D eines (nicht dargestellten) Tankverschlusses, dessen Bohrungen B mit den Bohrungen 27 und den Nocken 17 fluchten. Zur Befestigung des Deckelrings D am Tank durchsetzen Schrauben 39 die Bohrungen 27 des Unterteils U. Ein den Begrenzungen 18, 28 entsprechender Durchgangsbegrenzer 38 am Deckelring D erlaubt den Durchtritt des Tankverschlusses bzw. -stutzens.

Das Oberteil O ist an einem (nicht gezeichneten) Tankrucksack mit Schrauben oder Nieten befestigbar, welche die Nocken 17 durchsetzen. Alternativ ist seine Oberseite so gestaltet, daß es eine formangepaßte Halterung z.B. für eine Digital- oder Videokamera, für ein Navigatlonsgerät o.dgl. bildet, die bzw. das mit einem schwingungsisoliert am Oberteil O angebrachten Aufsatz A verbindbar ist, bevorzugt mittels eines daran vorhandenen Kupplungselements K.

Das Kuppeln der beiden Bautelle O, U geschieht dadurch, daß die krallenförmigen Enden 13 des in leicht schräger. d.h. angewinkelter Position gehaltenen Oberteils O auf die Krallengegenstücke 23 des Unterteils U aufgelegt werden (Fig. 2a), worauf das Oberteil O - mit dem Tankrucksack - um die Achse A (Fig. 1) herabgeschwenkt wird und die beiden Bauteile O, U mittels einer Schnapprast S bzw. eines Schnäppers 31 lösbar gesichert werden (Fig. 3). Beim Herabschwenken des Oberteils O kommen Anschlagrippen 14, die an der Unterseite des Profilkörpers angeordnet sind, zur Anlage an der Deckfläche 24 des Unterteils U. Dieser Zustand ist in Fig. 2b veranschaulicht. Zugleich legt sich die Unterseite der freien Enden 13 auf Anschlagflächen 29 der Krallengegenstücke 23, die innen/unten durch Rippen 26 versteift sind (Fig. 1).

Die Bauteile O, U sind bevorzugt so dimensioniert, daß das Oberteil O mit seiner Innenwand 12 das Unterteil U an dessen Außenwand 22 übergreift. Um die Handhabung zu erleichtern, hat das Oberteil O an seinen freien Enden 13 Anfaßrippen 19, so daß die Auflage des Oberteils O auf dem Unterteil U mühelos vollzogen werden kann, wodurch eine (gedachte) zentrale Schwenkachse entsteht.

Man entnimmt der Fig. 3, daß der gekuppelte Zustand mittels der Schnapprast S auf einfache Weise sicherbar ist. Der Steg 25 des Unterteils U hat eine Rastbohrung 35, in die unter der Kraft einer (nicht gezeichneten) Feder ein Schnappstift 33 des Schnäppers 31 einrasten kann, der am Steg 15 des Oberteils O mittels eines Stützrings 32 festgelegt ist. Fig. 3 zeigt die eingerastete Position (links) und - gestrichelt bzw. gepunktet - die Bewegung in Pfellrichtung zur Freigabe entgegen der Federspannung des Schnäppers 31.

Wie aus Fig, 4 und 5 hervorgeht, kann der Adapter 10 einen Aufsatz C vibratlonsgedämpft haltern, der seinerseits ein Kupplungselement K für eine Gerätschaft, einen Tankrucksack o,dgl. trägt. Dazu kann am Oberteil O eine Scheibe, Platte P o.dgl. befestigt sein, die seitlich abstehende Isolierelemente M für den Aufsatz C trägt. Sehr günstig ist es, wenn sich der Aufsatz C schwingungsisoliert auf Armen R der mit dem Oberteil O lösbar oder starr verbundenen Scheibe, Platte P o.dgl. abstützt. Die Arme R haltern bevorzugt Lager L für Isolierelemente M, die an oder in Winkelleisten W von seitlich überstehenden Teilen einer Deckplatte T gelagert sind, welche die Scheibe, Platte P o.dgl. berührungsfrei übergreift.

Die Erfindung ist nicht auf die vorbeschriebenen Ausführungs- und Anwendungsformen beschränkt, sondern in vielfältiger Weise abwandelbar. So kann das Oberteil O abweichend von Fig. 1 ein die Enden 13 einstückig verbindendes Brückenteil aufweisen, wodurch die Formfestigkelt erheblich gesteigert wird, ohne daß die Handhabung irgendwie beeinträchtigt würde. Man kann den Adapter ferner zur Halterung einer Digital- oder Videokamera, eines Navigationsgeräts u.dgl. benutzen, wobei das Oberteil O oberseitig der betreffenden Gerätschaft dient bzw. deren Form und Größe angepaßt ist, während das Unterteil U, die Befestigung am Deckelring D und die Handhabung unverändert bleiben.

Wesentlich ist, daß der erfindungsgemäße Adapter nur zwei miteinander kuppelbare, rahmen- oder ringförmige Bauteile erfordert, die die zur schwenkbaren Verbindung um eine insbesondere waagrechte Achse A formschlüssig und stabil miteinander verrastbar, aber bei Bedarf rasch voneinander lösbar sind, da man sie in schwenk- und lösbarer Weise an- oder ineinanderfügen sowie in gefügter Position sichern kann. Ein an einem Tankrucksackboden sitzendes Oberteil O ist mit einem am Tankverschlußdeckel angebrachten Unterteil U formähnlich und verrastbar. Bevorzugt haben die Bauteile O. U des Tankrucksack-Adapters 10 fluchtende freie Enden 13, 23 an Kunststoff-Profilkörpern 11, 21, wobei ein Bauteil das andere formschlüssig über- oder untergreifen kann. Im Fall einer Umfangsunterbrechung der Rahmen- bzw. Ringform haben die Bauteile O, U hufeisenähnliche Gestalt mlt paarweise gegengleichen Abschnitten 20, 30, die an- oder ineinander passen. Das Oberteil O muß nicht ringförmig sein: es genügt, wenn es Rastmittel für das Unterteil U hat, namentlich Rasthaken.

Günstig ist es, wenn die freien Enden 13 des einen Bauteils (z.B. O) als Krallen negative oder Hohl-Elemente sind, welche positive oder Voll-Elemente als Krallen-gegenstücke 23 des anderen Bauteils (z.B. U) teilweise umschließen. Zumindest die Enden 13 des Oberteils O können Anfaßrippen 19 aufweisen. Den zusammengefügten Adapter 10 sichert eine Schnapprast S, die an oder in einem Verbindungssteg gegenüber den Enden 13, 23 angeordnet ist und aus einem federbelasteten Schnäpper 31 sowie einer Aufnahmebohrung 35 besteht. Zum Entrasten ist an dem Schnäpper 31 ein Band oder Kettchen, eine Kordel oder Schnur o.dgl. angebracht, so daß die Schnapprast durch einfaches Ziehen entgegen der Schnäpperfeder gelöst und der Tankrucksack mühelos abgenommen werden kann. Das Oberteil O hat an seiner Unterseite Anschlagrippen 14, die in der gefügten Position der beiden Bauteile O, U auf oder in einer Deckfläche 24 des Unterteils U sitzen. Ein z.B. auf wenigstens drei Armen R des Oberteils O schwingungsisoliert montierter Aufsatz C kann ein Kupplungselement K für eine Gerätschaft aufweisen.

### Bezugszeichenliste

- A: Schwenkachse
- B: Bohrungen
- C: Aufsatz
- D: Deckelring
- K: Kupplungselement
- L: Lager
- M: Isolierelemente / Schwingmetall
- O: Oberteil
- P: Platte / Scheibe
- R: (Radial-)Arme
- S: Schnapprast
- T: Deckplatte
- U: Unterteil
- W: Winkellelsten

- 10: Adapter
- 11 1: (Profilkörper-) Umfangsteil
- 12: Innenwand
- 13: freie Enden / Krallen
- 14: Anschlagrippen
- 15: Steg
- 16: (Versteifungs-) Rippen
- 17: Nocken
- 18: Durchgangsbegrenzung
- 19: Anfaßrippen
- 20: Greifraum
- 21: (Profilkörper-) Umfangsteil
- 22: Außenwand
- 23: freie Enden / Krallengegenstücke
- 24: (Anschlag-) .Deckfläche
- 25: Steg
- 26: (Versteifungs-) Rippen.
- 27: Bohrungen
- 28: Durchgangsbegrenzung
- 29: Anschlagflächen
- 30: Lagemasen
- 31: Schnäpper
- 32: Stützrlng
- 33: Schnappstift
- 35: Rastbohrung
- 38: Durchgangsbegrenzer
- 39: Schrauben

## Patentansprüche

1. Adapter (10) zur lösbaren Befestigung einer Gerätschaft, eines Tankrucksacks oder dergleichen an einem Motorrad-Tankverschluss, mit zwei miteinander in lösbarer Weise verbindbaren Bauteilen (O, U), von denen ein Oberteil (O) an der Gerätschaft, dem Tankrucksack o.dgl. und ein Unterteil (U) an einem Tankverschlußdeckel anbringbar ist, z.B. durch Vernietung und/oder Verschraubung, wobei das am Boden der Gerätschaft, des Tankrucksacks o.dgl. anbringbare Oberteil (O) mit dem am Verschlußdeckel anbringbaren Unterteil (U) formähnlich und verrastbar ist, **dadurch gekennzeichnet, daß** zumindest eines der beiden Bauteile (O, U) Rahmen- oder Ringform hat, daß die Bauteile (O, U) Rahmen- bzw. Ringenden (13, 23) aufweisen, die in gefügter, sicherbarer Position miteinander fluchten, und daß die Ring- bzw. Rahmenenden (13, 23) der Bauteile (O, U) zur Verbindung um eine Schwenkachse (A) an- oder ineinanderfügbar sind, die zur Ebene (E) des Unterteils (U) parallel verläuft, um eine schalen- oder pfannenähnliche Gelenkverbindung zu realisieren.

2. Adapter nach Anspruch 1, **dadurch gekennzeichnet, daß** beide Bauteile (O, U) in Rahmen- oder Ringform derart gestaltet sind, daß ein Bauteil das andere formschlüssig über- oder untergreift.

3. Adapter nach Anspruch 1 oder 2, **dadurch gekennzeichnet, daß** die Ring- bzw. Rahmenform wenigstens eines Bauteils (O, U) in einem Umfangsbereich unterbrochen, insbesondere zwischen den Enden (13, 23) offen ist, so daß das bzw. jedes Bauteil (O, U) offene Ring- oder Hufeisenform hat.

4. Adapter nach Anspruch 1 oder 2, **dadurch gekennzeichnet, daß** das Oberteil (O) zwischen den Enden (13) ein diese verbindendes Brückenteil aufweist.

5. Adapter nach einem der Ansprüche 1 bis 4, **dadurch gekennzeichnet, daß** die Ring- bzw. Rahmenenden (13, 23) paarweise gegengleiche Abschnitte (20, 30) aufweisen.

6. Adapter nach einem der Ansprüche 1 bis 5, **dadurch gekennzeichnet, daß** die Rahmen- bzw. Ringenden (13) des einen Bauteils als Krallen und diejenigen (23) des anderen Bauteils als Krallen-Gegenstücke ausgebildet sind.

7. Adapter nach Anspruch 6, **dadurch gekennzeichnet, daß** jedes Gegenstück (23) ein positives oder Voll-Element bildet, das von einer Kralle (13) als negativem oder Hohl-Element zumindest teilweise umschlossen bzw. umschließbar ist.

8. Adapter nach einem der Ansprüche 1 bis 7, **dadurch gekennzeichnet, daß** zumindest die Rahmen- oder Ringenden (13) des Oberteils (O) Anfaßrippen (19) aufweisen.

9. Adapter nach einem der Ansprüche 1 bis 8, **dadurch gekennzeichnet, daß** das Oberteil (O) an seiner Unterseite Anschlagrippen (14) aufweist, die in der gefügten Position der Bauteile (O, U) auf oder in einer Deckfläche (24) des Unterteils (U) sitzen.

10. Adapter nach einem der Ansprüche 1 bis 9, **dadurch gekennzeichnet, daß** die Bauteile (O, U) einen inneren Freiraum begrenzen, indem einander formähnliche Durchgangsbegrenzungen (18, 28) von Ober- und Unterteil (O, U) einer formähnlichen Durchgangsbegrenzung (38) eines auf dem Unterteil (U) befestigten Deckelrings (D) zugeordnet sind.

11. Adapter nach Anspruch 10, **dadurch gekennzeichnet, daß** das Unterteil (U) auf dem Deckelring (D) mit dessen Schrauben (39) befestigbar ist.

12. Adapter nach einem der Ansprüche 1 bis 11, **dadurch gekennzeichnet, daß** die Bauteile (O, U) in zusammengefügter Position durch wenigstens eine Schnapprast (S) sicherbar sind.

13. Adapter nach Anspruch 12, **dadurch gekennzeichnet, daß** die Schnapprast (S) an einer den Rahmen- bzw. Ringenden (13, 23) gegenüberliegenden Stelle der Bauteile (O, U) angeordnet ist, namentlich an oder in einem Verbindungssteg (15, 25).

14. Adapter nach Anspruch 12 oder 13, **dadurch gekennzeichnet, daß** die Schnapprast (S) aus einem an dem einen Bauteil (O) angebrachten federbelasteten Schnäpper (31) und aus einer dessen Raststift (33) gegenüber angeordneten, insbesondere waagrechten Aufnahmebohrung (35) besteht.

15. Adapter nach Anspruch 14, **dadurch gekennzeichnet, daß** mit dem Schnäpper (31) eine Kordel, Schnur o.dgl. verbunden ist, mit welcher der Schnäpper (31) entgegen seiner Federkraft ausrastbar ist.

16. Adapter nach einem der Ansprüche 1 bis 15, **dadurch gekennzeichnet, daß** die Bauteile (O, U) als insbesondere aus Kunststoff bestehende Profilkörper (11, 21) mit Versteifungsrippen (16, 26) ausgebildet sind.

17. Adapter nach einem der Ansprüche 1 bis 16, **dadurch gekennzeichnet, daß** das Oberteil (O) an seiner Oberseite der Form und Größe einer zu halternden Gerätschaft angepaßt ist, z.B. einer Digital- oder Videokamera, einem Navigationsgerät o.dgl.

18. Adapter nach einem der Ansprüche 1 bis 17, **dadurch gekennzeichnet, daß** das Oberteil (O) einen Aufsatz (C) vibrationsgedämpft haltert.

19. Adapter nach Anspruch 18, **dadurch gekennzeichnet, daß** der Aufsatz (C) ein Kupplungselement (K) für eine Gerätschaft, einen Tankrucksack o.dgl. trägt.

20. Adapter nach Anspruch 18 oder 19, **dadurch gekennzeichnet, daß** am Oberteil (O) eine Scheibe, Platte (P) o.dgl. befestigt ist, die seitlich abstehende Isolierelemente (M) für den Aufsatz (C) trägt.

21. Adapter nach einem der Ansprüche 18 bis 20, **dadurch gekennzeichnet, daß** der Aufsatz (C) schwingungsisoliert auf Armen (R) einer mit dem Oberteil (O) lösbar oder starr verbundenen Scheibe, Platte (P) o.dgl. abgestützt ist.

22. Adapter nach Anspruch 20 und 21, **dadurch gekennzeichnet, daß** die Scheibe, Platte (P) o.dgl. berührungsfrei von einer Deckplatte (T) übergriffen ist, die z.B. an Winkelleisten (W) Lager (L) für die Isolierelemente (M) aufweist.

## Claims

1. Adapter (10) for the detachable fastening of an equipment, a tank bag, or similar, on a plug neck of a motorcycle tank with two detachably connectable parts (O,U) the upper part (O) of which can be fixed to the equipment, the tank bag, or similar, and the lower part (U) can be fixed to the plug neck of the tank for example by riveting and/or screw fitting and with the upper part (O) fixed to the bottom of the equipment, the tank bag, or similar, and being of similar shape as and interlockable with the lower part (U) fixed to the plug neck, **characterized in that** at least one of the two elements (O,U) is frame- or ring-shaped, the parts (O, U) have frame- or ring-shaped ends (13, 23) that in connected blockable position are in alignment, and that the ring- or frame ends (13, 23) of the parts (O, U) can be joined or interlocked to be connected around a swiveling axis (A) that is parallel to the plane (E) of the lower part (U) to realize a shell- or cup-type articulation.

2. Adapter according to Claim 1, **characterized in that** both frame- or ring-shaped parts (O, U) are designed such that one part covers the other positively from above or from below.

3. Adapter according to Claims 1 or 2, **characterized in that** the ring- or frame shape of at least one part (O, U) is interrupted in the peripheral region and open particularly between the ends (13, 23) so that the or each part (O,U) has the shape of an open ring or a horseshoe.

4. Adapter according to Claims 1 or 2, **characterized in that** the upper part (O) has a bridging-over element between its ends (13) that connects the same.

5. Adapter according to one of the Claims 1 to 4, **characterized in that** the ring or frame ends (13, 23) have diametrically opposed sections (20, 30) in pairs.

6. Adapter according to one of the Claims 1 to 5, **characterized in that** the frame or ring ends (13) of one of the parts are formed as claws and those (23) of the other part are formed as claw-counterparts.

7. Adapter according to Claim 6, **characterized in that** each counterpart (23) is shaped as a positive or solid element that is or may at least be partially enclosed by a claw as a negative or hollow element.

8. Adapter according to one of the Claims 1 to 7, **characterized in that** at least the frame or ring ends (13) of the upper part (O) have handling rips.

9. Adapter according to one of the Claims 1 to 8, **characterized in that** the upper part (O) features on its underside stop ribs (14) that in connected position of the parts (O, U) sit on or in a cover surface (24) of the lower part (U).

10. Adapter according to one of the Claims 1 to 9, **characterized in that** the parts (O,U) limit an interior free space by passage delimitations (18, 28) of similar shape in the upper part and the lower part (O,U) that are associated to an analogous passage delimitation (38) of an annular bezel (D) fixed to the lower part (U).

11. Adapter according to Claim 10, **characterized in that** the lower part (U) can be fixed on the annular bezel (D) with its screws (39).

12. Adapter to one of the Claims 1 to 12, **characterized in that** the parts (O,U) are in joint position blockable by at least one snap catch (S).

13. Adapter according to Claim 12, **characterized in that** the snap catch (S) is arranged at a section of the parts (O,U) opposite to the frame or ring ends (13, 23), in particular on or in a connecting ridge (15, 25).

14. Adapter according to Claims 12 or 13, **characterized in that** the snap catch (S) consists of a spring-loaded catch (31) affixed to one of the parts (O), and of a particularly horizontal location hole arranged opposite to its plunger pin (33).

15. Adapter according to Claim 14, **characterized in that** a cord, a string or the like is connected to the catch (31), by which the catch (31) can be disengaged against its spring resistance.

16. Adapter according to one of the Claims 1 to 15, **characterized in that** the parts (O,U) are designed as profiled bodies (11,21) particularly in plastic, and with stiffening ribs (16, 26).

17. Adapter according to one of the Claims 1 to 16, **characterized in that** the upper part (O) is on its upper side adapted to the shape and dimension of an equipment to be supported, e. g. a digital or video camera, a navigation system, or similar.

18. Adapter according to one of the Clams 1 to 17, **characterized in that** the upper part (O) supports a receptacle (C) vibration-protecting the latter.

19. Adapter according to Claim 18, **characterized in that** the receptacle (C) has a coupling element (K) for an equipment, a tank bag, or similar.

20. Adapter according to Claims 18 or 19, **characterized in that** on upper part (O) is fixed a disk, a plate (P), or similar bearing laterally protruding insulator elements (M) for the receptacle (C).

21. Adapter according to one of the Claims 18 to 20, **characterized in that** the receptacle (C) is oscillation-insulated supported on arms (R) of a disk, plate (P), or similar that is detachably or rigidly linked to the upper part (O).

22. Adapter according to Claims 20 and 21, **characterized in that** the disk, plate (P), or similar is overlapped without contact by a cover plate (T) that possesses for example on angular ledges (W) bearings for the insulator elements (M).

## Revendications

1. Adaptateur (10) pour la fixation amovible d'un appareillage, d'une sacoche de réservoir ou similaire sur un bouchon de réservoir de moto, avec deux éléments (O, U) susceptibles d'être assemblés l'un à l'autre de façon amovible, dont un élément supérieur (O) peut se monter sur l'appareillage, la sacoche de réservoir ou similaire et un élément inférieur (U) peut se monter sur un bouchon de réservoir, par exemple par rivetage ou par vissage, l'élément supérieur (O) pouvant se monter sur le fond de l'appareillage, de la sacoche de réservoir ou similaire étant de forme identique à celle de l'élément inférieur (U) pouvant se monter sur le bouchon de fermeture et enclenchable sur ce dernier, **caractérisé en ce qu'**au moins l'un des deux éléments (O, U) a la forme d'un cadre ou d'un anneau, **en ce que** les éléments (O, U) comportent des extrémités de cadre ou d'anneau (13, 23), qui en position assemblée et blocable sont alignées l'une sur l'autre et **en ce que**, pour la liaison autour d'un axe de pivotement (A) qui est parallèle au plan (E) de l'élément inférieur (U), les extrémités d'anneau ou de cadre (13, 23) des éléments (O, U) peuvent se joindre ou s'emboîter l'une dans l'autre, pour réaliser une liaison articulée du type d'une coque ou d'une poche.

2. Adaptateur selon la revendication 1, **caractérisé en ce que** les deux éléments (O, U) présentant la forme d'un cadre ou d'un anneau sont conçus de sorte qu'un élément accroche l'autre par-dessus ou par-dessous par complémentarité de forme.

3. Adaptateur selon la revendication 1 ou 2, **caractérisé en ce que** la forme d'anneau ou de cadre d'au moins un élément (O, U) est interrompue dans une zone périphérique, est notamment ouverte entre les extrémités (13, 23), de sorte que l'élément ou chaque élément (O, U) ait la forme d'un anneau ouvert ou d'un fer à cheval.

4. Adaptateur selon la revendication 1 ou 2, **caractérisé en ce que** l'élément supérieur (O) comporte entre les extrémités (13) un élément en pont reliant ces dernières.

5. Adaptateur selon l'une quelconque des revendications 1 à 4, **caractérisé en ce que** les extrémités d'anneau ou de cadre (13, 23) comportent des sections (20, 30) diamétralement opposées par paires.

6. Adaptateur selon l'une quelconque des revendications 1 à 5, **caractérisé en ce que** les extrémités d'anneau ou de cadre (13) de l'un des éléments sont réalisées sous la forme de griffes et celles (23) de l'autre élément sont réalisées sous la forme de pendants de griffes.

7. Adaptateur selon la revendication 6, **caractérisé en ce que** chaque pendant (23) forme un élément positif ou plein, qui est entouré ou susceptible d'être entouré au moins partiellement par une griffe (13) en tant qu'élément négatif ou creux.

8. Adaptateur selon l'une quelconque des revendications 1 à 7, **caractérisé en ce qu'**au moins les extrémités de cadre ou d'anneau (13) de l'élément supérieur (O) comportent des nervures de préhension.

9. Adaptateur selon l'une quelconque des revendications 1 à 8, **caractérisé en ce que** l'élément supérieur (O) comporte sur sa face inférieure des nervures de butée (14), qui dans la position jointe des éléments (O, U) sont logées sur ou dans une surface de recouvrement (24) de l'élément inférieur (U).

10. Adaptateur selon l'une quelconque des revendications 1 à 9, **caractérisé en ce que** les éléments (O, U) délimitent un espace libre intérieur, **en ce que** des délimitations de transition (18, 28) de forme mutuellement analogue de l'élément supérieur et inférieur (O, U) sont associées à une délimitation de transition de forme analogue (38) d'une bague de couvercle (D) fixée sur l'élément inférieur (U).

11. Adaptateur selon la revendication 10, **caractérisé en ce que** l'élément inférieur (U) est susceptible de se fixer sur la bague de couvercle (D), avec les vis de cette dernière.

12. Adaptateur selon l'une quelconque des revendications 1 à 11, **caractérisé en ce qu'**en position assemblée, les éléments (O, U) sont blocables par au moins un cliquet d'enclenchement (S).

13. Adaptateur selon la revendication 12, **caractérisé en ce que** le cliquet d'enclenchement (S) est disposé sur une zone des éléments (O, U) opposée aux extrémités de cadre ou d'anneau (13, 23), nominativement sur ou dans un listel de liaison (15, 25).

14. Adaptateur selon la revendication 12 ou 13, **caractérisé en ce que** le cliquet d'enclenchement (5) consiste dans un loqueteau (31) contraint par ressort monté sur l'un des éléments (O) et dans un perçage de logement (35) disposé à l'opposée de la tige d'enclenchement (33) de celui-ci, notamment horizontal.

15. Adaptateur selon la revendication 14, **caractérisé en ce qu'**au loqueteau (31) est relié une cordelette, une ficelle ou similaire, à l'aide de laquelle le loqueteau (31) peut se dégager à l'encontre de la tension de son ressort.

16. Adaptateur selon l'une quelconque des revendications 1 à 15, **caractérisé en ce que** les éléments (O, U) sont réalisés sous la forme de corps profilés (11, 21) notamment en matière plastique, avec des nervures de renfort (16, 26).

17. Adaptateur selon l'une quelconque des revendications 1 à 16, **caractérisé en ce que** l'élément supérieur (O) est adapté sur sa face supérieure à la forme et à la dimension d'un appareillage qui doit être maintenu, par exemple un appareil photo numérique ou une caméra vidéo, d'un appareil de navigation ou similaire.

18. Adaptateur selon l'une quelconque des revendications 1 à 17, **caractérisé en ce que** l'élément supérieur (O) retient un talon (C) en amortissant les vibrations.

19. Adaptateur selon la revendication 18, **caractérisé en ce que** le talon (C) porte un élément d'accouplement (K) pour un appareillage, une sacoche de réservoir ou similaire.

20. Adaptateur selon la revendication 18 ou 19, **caractérisé en ce que** sur l'élément supérieur (P) est fixé un disque, une plaque (P) ou similaire, qui porte des éléments isolants (M) latéralement débordants pour le talon (C).

21. Adaptateur selon l'une quelconque des revendications 18 à 20, **caractérisé en ce que** le talon (C) s'appuie en étant isolé en oscillations sur des bras (R) d'un disque ou d'une plaque (P) ou similaire relié(e) de façon amovible ou rigide avec l'élément supérieur (O).

22. Adaptateur selon la revendication 20 et 21, **caractérisé en ce que** le disque, la plaque (P) ou similaire est chevauché(e) sans contact par une plaque de recouvrement (T), qui comporte par exemple sur des baguettes en équerre (W) des paliers (L) pour les éléments isolants (M).
